**Europäisches Patentamt**

**European Patent Office**

**Office européen des brevets**

(19)

(11) Veröffentlichungsnummer : **0 155 385**
**B1**

(12) **EUROPÄISCHE PATENTSCHRIFT**

(45) Veröffentlichungstag der Patentschrift :
30.08.89

(51) Int. Cl.⁴ : **G 05 B 19/10**

(21) Anmeldenummer : **84115314.1**

(22) Anmeldetag : **12.12.84**

(54) Mikroprozessorgesteuerte Anzeigeeinheit.

(30) Priorität : **08.02.84 DE 3404418**

(43) Veröffentlichungstag der Anmeldung :
**25.09.85 Patentblatt 85/39**

(45) Bekanntmachung des Hinweises auf die Patenterteilung : **30.08.89 Patentblatt 89/35**

(84) Benannte Vertragsstaaten :
**AT BE CH DE LI NL SE**

(56) Entgegenhaltungen :
**EP-A- 0 082 311**
**US-A- 4 258 426**
**US-A- 4 345 145**
**A. Ralston: "Encyclopedia of Computer Science",**
**first edition, 1978, Van Nostrand Rheinhold Company,**
**New York, Seiten 1427 und 1428**

(73) Patentinhaber : **Siemens Aktiengesellschaft**
**Wittelsbacherplatz 2**
**D-8000 München 2 (DE)**

(72) Erfinder : **Baumgärtner, Manfred, Dr.**
**Jakob-Henle-Strasse 26**
**D-8510 Fürth (DE)**
Erfinder : **Gärtner, Franz-Georg, Dr.**
**Johann-Krieger-Strasse 27**
**D-8500 Nürnberg 50 (DE)**

**Beschreibung**

Die Erfindung betrifft eine mikroprozessorgesteuerte Anzeigeeinheit nach dem Oberbegriff des Patentanspruchs 1.

Elektronische Geräte weisen häufig eine Anzeige auf, mit der von mehreren relevanten Werten jeweils nur einer gleichzeitig dargestellt werden kann. Beispielsweise können durch Betätigen einer Taste die einzelnen Werte in einer festen Reihenfolge nacheinander aufgerufen werden. Um einen gerade interessierenden Wert darzustellen, muß also die Taste so oft betätigt werden, bis dieser auf der Anzeige erscheint. Beispielsweise lassen sich bei Aufladesteuergeräten für Speicherheizungen die anzuzeigenden Werte in zwei Wertegruppen einteilen. Die Werte der ersten Wertegruppe sind für den Benutzer interessant, z. B. ein eingestellter Temperaturwert. Die Werte der zweiten Wertegruppe sind nur für den Fachmann relevant, z. B. die Einstellwerte von Kennlinien.

Nun ist es bei der obengenannten Fortschaltung der Anzeige für den Benutzer verwirrend, wenn dabei eine Vielzahl von Werten angezeigt wird, mit denen er nichts anzufangen weiß. Außerdem ist dieses System auch bedienungsunfreundlich, da im Mittel eine hohe Anzahl von Tastenbetätigungen erforderlich ist, bis der Benutzer den ihn interssierenden Wert herausgefunden hat. Die zweite, nur für den Fachmann interessante Wertegruppe, ist nämlich zahlenmäßig meist wesentlich umfangreicher als die erste, den Benutzer interessierende Wertegruppe.

Aus der US-A-4 258 426 ist eine Anordnung zum Selektieren von Werten einer Gruppe von Daten bekannt, bei der einzelne Einstelldaten bzw. einzelne Funktionen abgerufen werden können. Jedoch ist nicht vorgesehen, Datengruppen etwa nach dem Kriterium der Zuordnung zu bestimmten Bedienungspersonen in Form von Schleifen mit einzeln abrufbaren Positionen zuzuordnen und diese Schleifen wahlweise anzusteuern.

Aus der US-A-4 345 145 ist ein vom Benutzer programmierbares Regelsystem für die Anwendung bei Toastern bekannt, bei dem eine mikroprozessorgesteuerte Anzeigeeinheit vorhanden ist, die dazu dient, der Anzeigeeinheit bestimmte Funktionen zuzuordnen und deren Werte anzuzeigen. Diese Werte sind von einem Bedientableau programmier- und speicherbar.

Aus der EP-A1-0 082 311 ist ein programmierbarer Zeitschalter für einen Mikrowellenherd bekannt, der auf zwei unterschiedliche Funktionen umgeschaltet werden kann. In der einen Betriebsart (PROGRAM mode) ist der Zeitschalter programmierbar, während in der anderen Funktionsstufe (OPERATE mode) die einzelnen Zeitstufen in Funktion gesetzt werden können.

Der Erfindung liegt die Aufgabe zugrunde, eine Anzeigeeinheit der eingangs genannten Art so zu gestalten, daß die bestimmten Personenkreisen zugeordneten und in jeweils einer Wertegruppe zusammengefaßten Werte einzeln abgerufen und angezeigt werden können.

Diese Aufgabe wird durch die im Patentanspruch 1 angegebene Erfindung gelöst. Dadurch ist erreicht, daß jeder Benutzerkreis die ihn interessierenden Werte zyklisch abrufen kann. Im Normalbetrieb wird nur auf wenige Werte einer ersten Wertegruppe umgeschaltet, die nur für den Benutzer interessant sind. Dadurch kann ein bestimmter Wert wesentlich schneller angewählt werden. Außerdem ist es für den Benutzer einfacher, die Bedeutung der jeweiligen Anzeige, d. h. die Art des angezeigten Wertes, zu erkennen.

Bei einer Anzeigeeinheit, bei der die Fortschaltung der Anzeige durch einen Taster erfolgt, kann das Bedienungskriterium eine Mindestzeit eines ununterbrochenen Tastendruckes sein. Wenn also beispielsweise anstelle des normalen Benutzers ein Fachmann auch Werte aus der zweiten Wertegruppe mit umfassenderen Daten abfragen will, so wird er die Taste zunächst für eine längere Zeit drücken und gelangt damit in einen Betriebszustand, bei dem er durch weitere kurze Tastenbetätigungen auch Werte aus der zweiten Wertegruppe zur Anzeige bringen kann. Dazu ist kein zusätzliches Bedienungselement erforderlich.

Wenn bei einer Anzeigeeinheit der vorbeschriebenen Art die Größen der Werte durch den Mikroprozessor periodisch abgefragt werden, wird in einer Weiterbildung der Erfindung nach einer Änderung eines Einstellwertes dieser unabhängig von der regulären Anzeigereihenfolge und seiner Wertegruppe angezeigt. Wenn also ein Einsteller betätigt wird, erfolgt sofort eine Anzeige des diesem zugeordneten Einstellwertes. Dabei ist keine zugeordnete Anwahl der Anzeige erforderlich und die Zuordnung zwischen der Einstellung und der Anzeige ist unmittelbar ersichtlich.

Vorteilhafterweise kann die Anzeige auf den ersten Wert der ersten Wertegruppe zurückspringen, wenn innerhalb einer vorgegebenen Zeit keine Bedienungselemente der Anzeige betätigt werden. Damit wird also im Normalbetrieb stets der am meisten interessierende Wert angezeigt. Wenn vorher durch Vorgabe des Bedienungskriteriums Werte aus der zweiten Wertegruppe angezeigt worden sind, geht die Anzeigeeinheit wieder in den Betriebsmodus der ersten Wertegruppe über.

Ein Ausführungsbeispiel der Erfindung wird nachfolgend anhand der FIG und der Tabelle näher erläutert.

Ein in der FIG schematisch dargestelltes Gerät 1 weist eine Anzeigeeinheit 2, Einstellelemente 4 und 5 sowie eine Taste 3 auf. Das Einstellelement 4 ist durch den Benutzer verstellbar, während die in einem Feld 6 angeordneten Einstellelemente 5 nur durch einen Fachmann verstellt werden sollen. Das Feld 6 wird daher im Normalfall abgedeckt.

Für den Betrieb des Gerätes 1 ist eine Reihe von Werten maßgebend, die in zwei Wertegruppen eingeteilt werden können, die in der Tabelle mit A bzw. B gekennzeichnet sind. Die Wertegruppe A1, 2, 3 enthält Werte, die für den Bediener von Interesse sind, beispielsweise Temperatur-oder Zeitangaben bei Heizungsreglern. Die Wertegruppe B4, 5, 6, 7 enthält Werte, die nur für den Fachmann für die Inbetriebsetzung bzw. Wartung von Bedeutung sind, beispielsweise die Einstellwerte von Kennlinien für Heizungsregler. Diese Werte dürfen im Normalfall nur vom Fachmann durch die Einstellelemente 5 verändert werden. Darüber hinaus können in der Wertegruppe B beispielsweise Angaben enthalten sein, die eine Fehlersuche erleichtern.

Die Anzeige 2 des Geräts 1 kann nur einen der Werte gleichzeitig anzeigen, und zwar ist dies im Grundzustand der in der Tabelle mit A1 bezeichnete Wert. Hierfür wird man den im Normalfall am meisten interessierenden Wert wählen. Wird nun die Taste 3 kurz betätigt, wird auf der Anzeige 2 der Wert A2 dargestellt, bei einer weiteren Tastenbetätigung der Wert A3 und schließlich wieder der Wert A1. Durch Betätigung der Taste 3 können also nacheinander in einer in der Tabelle angedeuteten Schleife mit fester Reihenfolge die Werte der Wertegruppe A abgefragt werden. Der Benutzer wird durch die Werte der Wertegruppe B nicht belastet, so daß er den gewünschten Wert schnell anwählen kann. Außerdem erkennt er leichter, welcher Parameter gerade angezeigt wird, da er nicht durch die für ihn fremdartigen Angaben in der Wertgruppe B verwirrt wird.

Wird innerhalb einer längeren Zeit, beispielsweise innerhalb von vier Minuten die Taste 3 nicht mehr betätigt, so wird automatisch wieder der Wert A1 angezeigt.

Wenn der Fachmann auch die Wertegruppe B abfragen will, so drückt er die Taste 3 längere Zeit, z. B. 10 Sekunden ununterbrochen. Damit wird der Wert B4 angezeigt. Die Werte B5 bis B7 können durch entsprechendes wiederholtes Drücken der Taste 3 angezeigt werden. Anschließend folgt wieder der Wert A1, so daß im Anzeigezyklus nun die in der Tabelle dargestellte größere Schleife durchlaufen wird. Wenn innerhalb von z. B. vier Minuten die Taste 3 nicht mehr betätigt wird, so springt die Anzeige auch aus dem Wertebereich B wieder auf den Wert A1 und bei erneuter Betätigung der Taste 3 wird wiederum lediglich die Wertegruppe A abgefragt.

Wenn eines der Einstellelemente 4 oder 5 verstellt wird, so wird die Anzeige 2 automatisch auf den betreffenden Einstellwert umgeschaltet, und zwar unabhängig davon, ob dieser zur Wertegruppe A oder B gehört. Diese Umschaltung wird vom Mikroprozessor gesteuert, der periodisch die Stellung aller Einsteller 4, 5 abfragt und bei einer Änderung die Anzeige entsprechend umschaltet. Damit hat der Einstellende direkt eine Information über den von ihm veränderten Wert, so daß eine irrtümliche Zuordnung von Anzeige und Einstellwert nicht möglich ist. Die Anzeige springt wiederum auf den Wert 1, wenn innerhalb von vier Minuten weder Einstellelemente 4, 5 noch die Taste 3 betätigt werden. Auch hierbei werden dann anschließend wiederum nur Werte der Wertegruppe A abgefragt.

(Siehe Tabelle Seite 4 f.)

```
1.    | A |   | 1 | 2 | 5 |  ┐
2.    | L |   |   | 4 | 2 |  ├─  A
3.    | G |   | 1 | 3 | 3 |  ┘

4.    | M |   |   | 2 | 0 |  ┐
5.    | F |   | 3 | 3 | 5 |  │
6.    | R |   | 5 | 2 | 0 |  ├─  B
7.    | S |   | 3 | 8 | 7 |  ┘
```

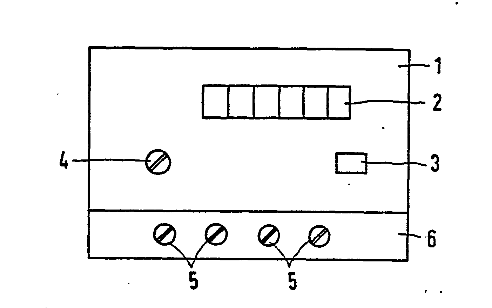

**Patentansprüche**

1. Mikroprozessorgesteuerte Einstell- und Anzeigeeinheit (1) von Heizungsreglern für einen Wert aus zwei Wertegruppen (A, B), wobei eine erste Wertegruppe (A) die Temperatur- und Zeitangaben und eine zweite Wertegruppe (B) nur Werte für die Inbetriebsetzung und Wartung durch den Fachmann enthält und durch Fortschaltung der Anzeige die Werte nacheinander in einer Schleife mit fester Reihenfolge angezeigt werden, dadurch gekennzeichnet, daß einem Bedienungselement (3) ein Einstellelement (4) für die erste Wertegruppe (A) und Einstellelemente (5) für die zweite Wertegruppe (B) zugeordnet sind und die Anzeigeeinheit (2) nur einen Wert gleichzeitig und im Grundzustand nur den meist interessierenden Wert anzeigt und bei Fortschaltung des Bedienelementes (3) nacheinander die Werte der ersten Wertegruppe (A) und bei einer Umschaltung des Bedienelementes (3) nacheinander die Werte auch der zweiten Wertegruppe (B) angezeigt werden.

2. Mikroprozessorgesteuerte Anzeigeeinheit nach Anspruch 1, wobei die Fortschaltung der Anzeige durch einen Taster (3) erfolgt, dadurch gekennzeichnet, daß das Bedienungskriterium eine Mindestzeit eines ununterbrochenen Tastendruckes ist.

3. Mikroprozessorgesteuerte Anzeigeeinheit nach Anspruch 1 oder 2, bei der die Größen der Werte durch den Mikroprozessor periodisch abgefragt werden, dadurch gekennzeichnet, daß nach einer Änderung eines Wertes an einem der Einstellelemente (4, 5) dieser unabhängig von der regulären Anzeigereihenfolge und seiner Wertegruppe (A, B) angezeigt wird.

4. Mikroprozessorgesteuerte Anzeigeeinheit nach einem der Ansprüche 1 bis 3, dadurch gekennzeichnet, daß die Anzeige (2) auf den ersten Wert der ersten Wertegruppe (A1) zurückspringt, wenn innerhalb einer vorgegebenen Zeit keine Bedienungselemente (3, 4, 5) der Anzeige (2) betätigt werden.

**Claims**

1. Microprocessor-controlled adjusting and display unit (1) of heating regulators for a value from two

4

value groups (A, B), a first value group (A) containing the temperature and time data and a second value group (B) only containing values to be put into operation, and for maintenance, by the expert and the values being displayed successively in a loop with fixed sequence by means of continuous-switching operation of the display, characterized in that an adjusting element (4) for the first value group (A) and adjusting elements (5) for the second value group (B) are allocated to an actuating element (3) and the display unit (2) displays only one value at the same time and in the initial state only the most interesting value, and during the continuous-switching operation of the actuating element (3) the values of the first value group (A) are displayed successively and, if the actuating element (3) is switched over, the values of the second value group (B) too are displayed successively.

2. Microprocessor-controlled display unit according to claim 1, the continuous-switching operation of the display occurring by means of a pushbutton (3), characterized in that the actuating criterion is a minimum time of an uninterrupted pressing of the pushbutton.

3. Microprocessor-controlled display unit according to claim 1 or 2, whereby the magnitudes of the values are scanned periodically by the microprocessor, characterized in that after a change of a value to one of the adjusting elements (4, 5), the latter is displayed independently of the regular display sequence and its value group (A, B).

4. Microprocessor-controlled display unit according to one of claims 1 to 3, characterized in that the display (2) jumps back to the first value of the first value group (A1) if no actuating elements (3, 4, 5) of the display (2) are operated within a predetermined time.

## Revendications

1. Unité de réglage et d'affichage (1), commandée par microprocesseur, de régulateurs de chauffage, pour l'affichage d'une valeur tirée de deux groupes de valeurs (A, B), et dans laquelle un premier groupe de valeurs (A) contient les indications de température et de temps et un second groupe de valeurs (B) contient uniquement des valeurs pour la mise en service et l'entretien par le spécialiste, et les valeurs sont affichées successivement, par suite de la progression de l'affichage, selon une séquence fixe en boucle, caractérisée par le fait qu'à un élément de commande (3) sont associés un élément de réglage (4) pour le premier groupe de valeurs (A) et des éléments de réglage (5) pour le second groupe de valeurs (B), que l'unité d'affichage (2) affiche une seule valeur à la fois et, dans l'état de base, uniquement la valeur la plus intéressante, et que, lors de l'avancement de l'élément de commande (3), les valeurs du premier groupe de valeurs (A) sont affichées successivement et, lors d'une commutation de l'élément de commande (3), également les valeurs du second groupe de valeurs (B) sont affichées successivement.

2. Unité d'affichage commandée par microprocesseur suivant la revendication 1, dans laquelle la progression de l'affichage est réalisée au moyen d'une touche (3), caractérisée par le fait que le critère de commande est une durée minimale d'un enfoncement ininterrompu de la touche.

3. Unité d'affichage commandée par microprocesseur suivant la revendication 1 ou 2, dans lequel les grandeurs des valeurs sont interrogées périodiquement par le microprocesseur, caractérisée par le fait qu'après une modification d'une valeur au niveau de l'un des éléments de réglage (4, 5), cette valeur est affichée indépendamment de la succession régulière de l'affichage et de son groupe de valeurs (A, B).

4. Unité d'affichage commandée par microprocesseurs suivant l'une des revendications 1 à 3, caractérisée par le fait que l'affichage (2) saute en retour à la première valeur des premiers groupes de valeurs (1), lorsqu'aucun élément de commande (3, 4, 5) du dispositif d'affichage (2) n'est actionné pendant un intervalle de temps prédéterminé.